# EUROPÄISCHE PATENTSCHRIFT

(11) **EP 0 735 011 B1**
(45) Veröffentlichungstag und Bekanntmachung des Hinweises auf die Patenterteilung: **18.12.2002**
(21) Anmeldenummer: 96104624.0
(22) Anmeldetag: 22.03.1996
(51) Int. Cl.: C04B 38/06

(54) **Dämmaterial**
Insulating material
Matériau isolant

(30) Priorität: 27.03.1995 DE 29505162 U
(43) Veröffentlichungstag der Anmeldung: 02.10.1996
(73) Patentinhaber: Mansfeld, Lothar, D-21502 Geesthacht (DE)
(72) Erfinder: Mansfeld, Lothar, D-21502 Geesthacht (DE)
(74) Vertreter: Glawe, Delfs, Moll & Partner

(56) Entgegenhaltungen:
- EP-A- 0 012 408
- EP-A- 0 160 940
- EP-A- 0 512 479
- EP-A- 0 551 577
- EP-A- 0 623 567
- DD-A- 223 144
- DE-A- 2 549 118
- DE-A- 2 754 084
- DE-A- 4 106 727
- DE-C- 549 519
- FR-A- 513 833
- FR-A- 1 440 920
- FR-A- 2 122 220

## Beschreibung

Es ist bekannt (EP-A 512 479, DE-C 32 02 488), aus Abfallstoffen organischer Stoffe, insbesondere unter Verwendung von faserhaltigen Stoffen, unter Zusatz anorganischer Stoffe ein Dämmaterial herzustellen. Diese sind verhältnismäßig billig. Aufgrund des zugefügten Mineralmaterials sind sie auch schwer entflammbar. Diese Materialien weisen aber nur geringe Festigkeiten auf, sind lediglich nach einer zusätzlichen Hydrophobierung gegenüber Wassereinwirkung formstabil und nicht dauerhaft verrottungsfest. Bei entsprechender Erhitzung im Brandfall geben sie brennbare, im allgemeinen auch toxische Gase ab.

Die Aufgabe der Erfindung besteht in der Herstellung eines leichten, gut schall- und wärmeisolierenden Dämmaterials, das unter Feuchteeinwirkung formstabil, verrottungsfest und feuerbeständig ist und unter Einwirkung von Feuer weder entfestigt wird noch brennbare und/oder toxische Gase abgibt.

Die erfindungsgemäße Lösung besteht in den Merkmalen des Anspruchs 1, sowie vorzugsweise denen der Unteransprüche.

Organische Stoffe, die insbesondere faserhaltig sind und Abfallstoffe sein können, insbesondere Altpapier- oder Textilabfall sowie in der Papierindustrie anfallender, unverwertbarer kurzfaseriger Abfall, werden unter Wasserzusatz - mit bekannten Methoden der (Papier-)Rohstoffaufbereitung - zu einem feinstteiligen Ausgangsstoff zerkleinert, bei steifplastischer bis gießfähiger Konsistenz. Zur Verbesserung des Verbundes sowie der Festigkeitseigenschaften wird den organischen Ausgangsstoffen eine mineralisierende Flüssigkeit (Alkalisilikatlösungen) sowie gegebenenfalls weitere anorganische Reaktionsstoffe und Mineralstoffe zugesetzt und in einem Mischvorgang homogenisiert. Das in der Hauptsache aus organischen Bestandteilen bestehende Grundgemisch wird durch Wärmebehandlung bei einigen hundert °C verkohlt oder verkokt, d.h. unter Luftabschluß (ohne Sauerstoffzufuhr) erhitzt. Dabei gibt es brennbare Gase ab, die als Heizgas für das Verfahren verwendet werden können. Vom organischen Stoff bleibt dann im wesentlichen nur Kohlenstoff übrig; das Dämmaterial weist zusätzlich noch ein Skelett des anorganischen Materials auf.

Hierbei erhält man einen Leichtstoff hoher Festigkeit. Dieser ist (wegen der Erhitzung beim Verkoken) völlig keimfrei, sogar wenn zur Herstellung kontaminierte Materialien verwendet worden sind. Da er kein organisches Material mehr enthält, ist der Dämmstoff auch verrottungsfest und unter Feuchteeinwirkung formstabil. Er ist auch unbrennbar. Versuche haben ergeben, daß er Temperaturen bis zu ≥ 1.000°C ohne weiteres widerstehen kann und dabei keine giftigen oder brennbaren Gase abgibt. Die Verkokung kann in kontinuierlich und diskontinuierlich arbeitenden Temperierungsanlagen erfolgen.

Es ist ein feuerfestes Dämmaterial bekannt (EP-A 160 940), das aus feuerfestem Ton oder Kaolin sowie einem anorganischen Binder besteht, wobei als Binder ein Gemisch aus sauren Metallphosphaten vom Aluminium-, Chrom- oder Magnesiumphosphattyp oder Aluminiumsulfat oder ein Gemisch aus Metallphosphaten oder eine Organosilikatverbindung vom Äthylsilikat- oder alkalischen Metallsilikattyp verwendet wird. Zur Erzeugung von Poren wird ein kleinteiliger, verbrennender organischer Stoff eingemischt, beispielsweise Getreidehülsen, Sägespäne oder Zellstoffbrei. Beim Brennen der Masse werden die organischen Bestandteile verbrannt, so daß an ihrer Stelle Poren verbleiben, die die Wärmedämmfähigkeit des Materials begründen. Vor dem Einmischen werden die organischen Stoffe mit anorganischem Binder getränkt, so daß nach ihrer Verbrennung Poren mit Mikrozellenstruktur entstehen. Da zur Porenbildung die Beseitigung der organischen Partikeln durch Verbrennen angestrebt wird, findet dieser Prozeß unter Luftzutritt statt. Jedoch hemmt das anorganische Material den Zutritt von Sauerstoff zu den organischen Partikeln, so daß diese zum Teil nicht vollständig verbrennen, sondern in verkohltem Zustand in der Masse verbleiben.

Ein extrem leichter Dämmstoff kann durch Zugabe von Schaum oder Entwicklung von Gasporen im Grundgemisch hergestellt werden. Durch entsprechende Steuerung des Verfahrens kann auch die Porengröße und der Porengehalt reguliert werden. Die dabei erhaltenen Festigkeiten sind noch relativ hoch.

Das Dämmaterial kann in beliebiger Weise geformt werden, insbesondere zu Platten, Formkörpern oder Pellets, wobei die Verarbeitung durch Gieß-, Spritz- und Preßtechniken sowie Pelletier- und Granulierverfahren erfolgt. Die Pellets wiederum können in unterschiedlicher Korngröße hergestellt werden und dann als Zusatz (Zuschlag) zu Baustoffen und/oder anderen Bauprodukten verarbeitet werden. Die Oberflächen der Pellets bzw. Bauprodukte und Bauelemente können gegen Feuchtigkeitsaufnahme hydrophobiert (Applikation von Silikonharzen, Silanen, Siloxanen oder Stearaten) und/oder durch Beschichtungen oder Kaschierungen mit Kunststoff- und/oder Metallfolien geschützt werden. So könnte z.B., wenn sie noch heiß sind, durch Bestäuben ein mehlfeiner thermoplastischer Kunststoff (z.B. Styrol, Polyethylen, PVC usw.) auf die Oberfläche aufgebracht werden, der dann schmilzt und die Oberfläche versiegelt. Andererseits kann dies durch Applikation filmbildender Reaktionsharze (Duroplaste) erfolgen.

Bei der Herstellung ist der Wassergehalt der Grundmasse so niedrig wie möglich zu halten, wie es die Verarbeitung zu Formteilen und Pellets gerade noch zuläßt (gegebenenfalls Entwässerung durch Filterpresse), da bei der Hestellung des Dämmaterials der Energiebedarf mit der Menge des zu verdampfenden Wassers ansteigt. Ein sehr niedriger Wassergehalt beeinflußt jedoch den Porositätsgrad - und damit die Dichte - des durch Verkokung gewonnenen Endprodukts. Dies läßt sich aber durch Einführung von Mikroporen in die Grundmasse ausgleichen, die durch Schaumzugabe und/oder Mikro-Gasporenbildner (Tenside, Aluminiumpulver usw.) erfolgt und damit erhöhte Dichten kompensiert.

Bei bzw. nach der Formung der Grundmasse zu Platten, Formkörpern oder Pellets, können diese mit Mineralstäuben an der Oberfläche benetzt sein (z.B. Mikrosilica, Aluminiumhydroxid, Kalziumhydroxid, Steinkohlenflugasche usw.), damit sie nicht beim Fertigungsverfahren anhaften oder gegenseitig verkleben, bevor sie verkokt werden.

Alkalisilikatlösungen, anorganische Stoffe und Mineralien, die vorzugsweise verwendet werden, sind in den Unteransprüchen genannt.

Wie erwähnt kann das Dämmaterial zu Platten usw. verarbeitet werden. Die Pellets unterschiedlicher Korngröße können vielfältig als Leichtzuschlag bei der Produktion von Mörteln, Steinen oder Formteilen usw. sowie lose geschüttet und/oder verkittet in der Baustoffindustrie Verwendung finden.

In den folgenden Tabellen 1 und 2 sind die Ergebnisse von praktischen Versuchen zusammengefaßt. Es wurden Ausgangsmaterialien mit zwei ein wenig unterschiedlichen Zusammensetzungen verwendet. Die enstprechende Mischung wurde in eine Form eingefüllt, die dann aus einer Höhe von einigen Zentimetern auf eine Unterlage fallengelassen wurde, was zu einer gewissen Verdichtung führte, die in den Tabellen als "Entlüftung durch Schockverfahren" bezeichnet ist. Es wurde zunächst ein Trocknung auf 105°C durchgeführt und dann die Verkokung bei einer Umgebungstemperatur von 520°C. Die Eigenschaften der so hergestellten Dämmstoffe sind am Schluß der beiden Tabellen angegeben.

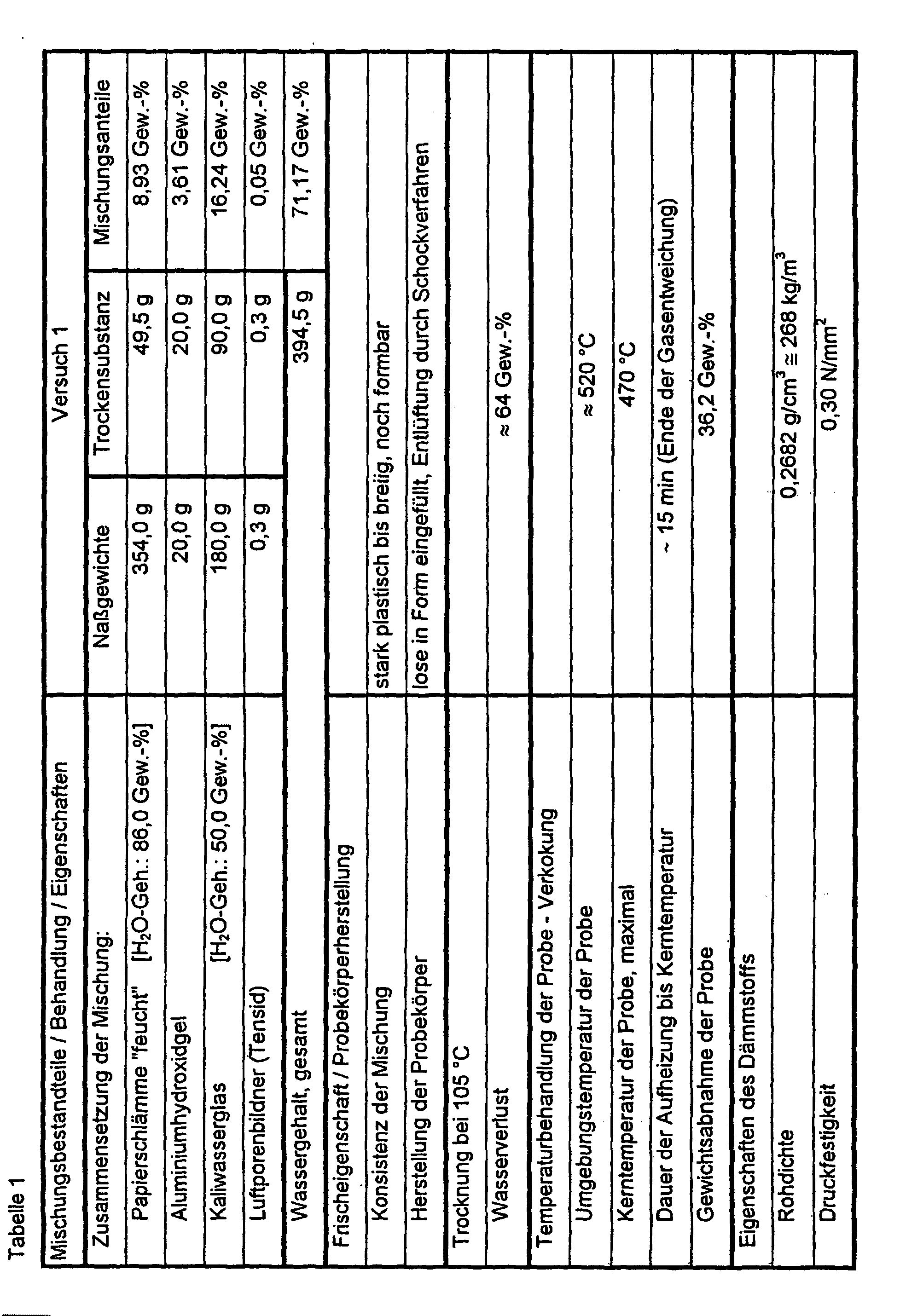

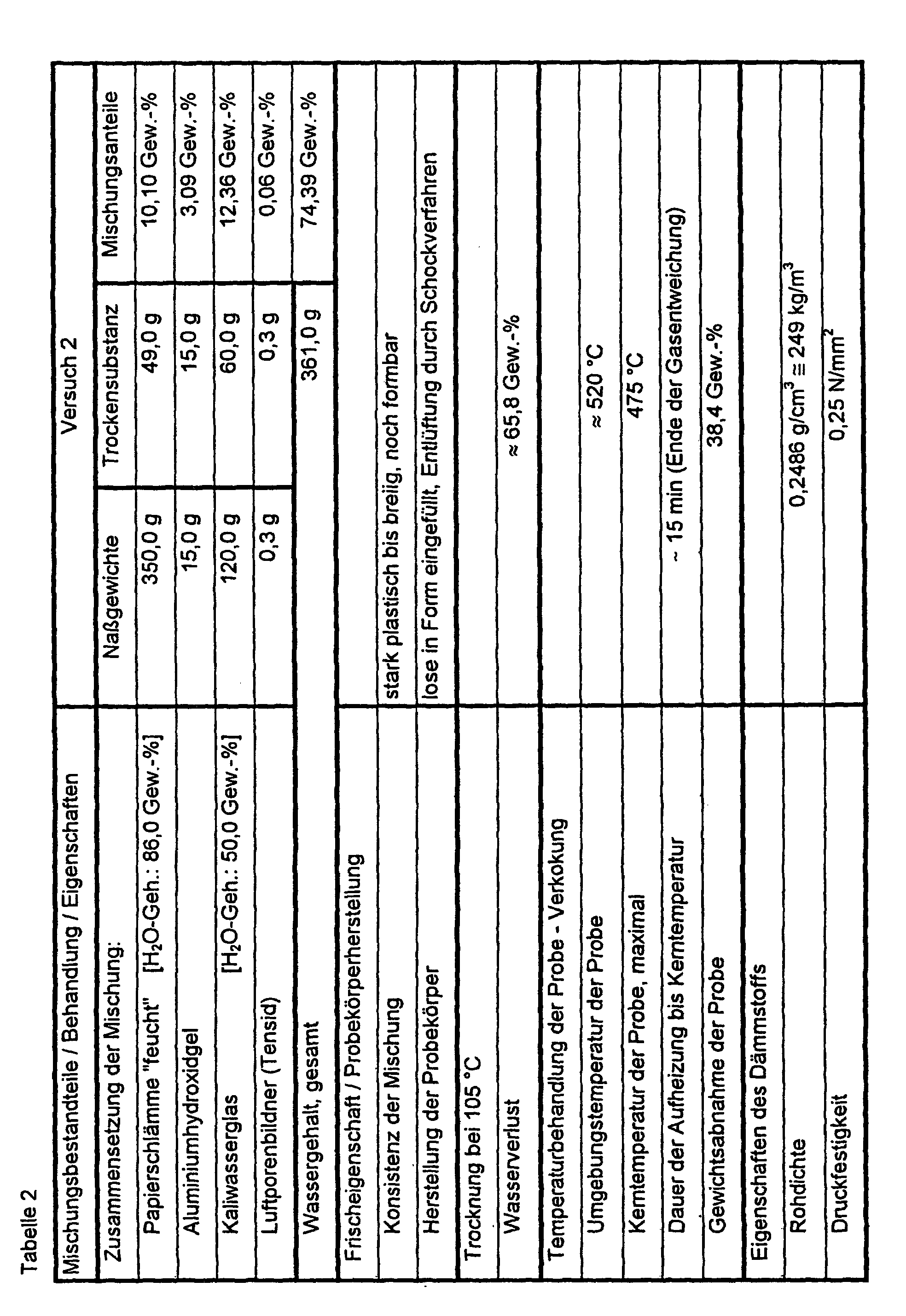

## Patentansprüche

1. Verfahren zum Herstellen eines Dämmaterials durch Erhitzen eines wasserhaltigen Gemisches aus organischen und anorganischen Stoffen, **dadurch gekennzeichnet, daß** die organischen Stoffe unter Zusatz von Alkalisilikatlösung und gegebenenfalls einem oder mehreren aus der folgenden Gruppe ausgewählten Stoffen, bei Temperaturen von deutlich über 200°C bis zu einigen hundert °C unter Sauerstoffausschluß verkokt werden:
- amorphe Kieselsäure (Mikrosilica, Füllungskieselsäure)
- Tonerdemineralien
- Alumosilikate
- Aluminium-, Magnesium-, Kalziumhydroxide
- Steinkohlen- oder Braunkohlenflugasche, Elektrofilterstaub
- Metallsilikofluoride.

2. Verfahren nach Anspruch 1, **dadurch gekennzeichnet, daß** das Gemisch in der Hauptsache aus organischen Bestandteilen besteht.

3. Verfahren nach Anspruch 1 oder 2, **dadurch gekennzeichnet, daß** die organischen Stoffe faserhaltig sind.

4. Verfahren nach einem der Ansprüche 1 bis 3, **dadurch gekennzeichnet, daß** die organischen Stoffe Abfallstoffe sind.

5. Verfahren nach einem der Ansprüche 1 bis 4, **dadurch gekennzeichnet, daß** die organischen Stoffe vorher zerkleinert werden.

6. Verfahren nach einem der Ansprüche 1 bis 5, **dadurch gekennzeichnet, daß** es unter Zugabe oder Entwicklung von Schaum oder Mikroporen (übliche Schaumbildner, Tenside oder Aluminiumpulver) durchgeführt wird.

7. Verfahren nach einem der Ansprüche 1 bis 6, **dadurch gekennzeichnet, daß** das Gemisch vor dem Verkoken geformt wird.

8. Verfahren nach Anspruch 7, **dadurch gekennzeichnet, daß** die Oberfläche mit Mineralstaub benetzt wird.

9. Verfahren nach Anspruch 7 oder 8, **dadurch gekennzeichnet, daß** die Oberfläche gegen Feuchtigkeitsaufnahme hydrophobiert wird.

10. Verfahren nach einem der Ansprüche 1 bis 9, **dadurch gekennzeichnet, daß** das bei der Verkokung erzeugte Gas als Heizgas für das Verfahren verwendet wird.

## Claims

1. A method of producing an insulating material by heating a hydrous mixture of organic and inorganic substances, **characterised in that** the organic substances are carbonised with the addition of alkali silicate solution and, optionally, one or more of substances chosen from the following group, at temperatures substantially higher than 200°C up to several hundred °C under oxygen exclusion:
- amorphous silicic acid (microsilica, filling silicic acid)
- alumina minerals
- aluminosilicates
- aluminium, magnesium, calcium hydroxides
- hard coal or brown coal fly ash, electrostatic precipitator dust
- metal fluorosilicates.

2. A method according to Claim 1, **characterised in that** the mixture principally consists of organic components.

3. A method according to Claim 1 or 2, **characterised in that** the organic substances contain fibres.

4. A method according to any one of Claims 1 to 3, **characterised in that** the organic substances are waste products.

5. A method according to any one of Claims 1 to 4, **characterised in that** the organic substances are previously comminuted.

6. A method according to any one of Claims 1 to 5, **characterised in that** it is carried out with the addition of or development of foam or micropores (conventional foaming agents, surfactants or aluminium powder).

7. A method according to any one of Claims 1 to 6, **characterised in that** the mixture is shaped prior to carbonisation.

8. A method according to Claim 7, **characterised in that** the surface is wetted with mineral dust.

9. A method according to Claim 7 or 8, **characterised in that** the surface is rendered repellent to moisture absorption.

10. A method according to any one of Claims 1 to 9, **characterised in that** the gas produced during the carbonisation is used as heating gas for the method.

## Revendications

1. Procédé pour fabriquer un matériau isolant par le réchauffement d'un mélange aqueux à base de substances organiques et inorganiques, caractérisé en ce les substances organiques sont cokéfiées avec l'addition d'une solution de silicate alcalin et éventuellement d'une ou plusieurs substances choisies à partir du groupe suivant, à des températures nettement supérieures à 200°C jusqu'à quelques centaines de degrés avec l'exclusion d'oxygène :
- acide silicique amorphe (micro silice, acide silicique de remplissage)
- minéraux d'alumine
- aluminosilicates
- hydroxydes d'aluminium, de magnésium et de calcium
- cendre volante de houille ou de lignite, poussière d'électrofiltre
- silicofluorures de métal

2. Procédé selon la revendication 1, **caractérisé en ce que** le mélange est à base principalement de composants organiques.

3. Procédé selon la revendication 1 ou 2, **caractérisé en ce que** les substances organiques sont à base de fibre.

4. Procédé selon l'une quelconque des revendications 1 à 3, **caractérisé en ce que** les substances organiques sont des déchets.

5. Procédé selon l'une quelconque des revendications 1 à 4, **caractérisé en ce que** les substances organiques sont broyées auparavant.

6. Procédé selon l'une quelconque des revendications 1 à 5, **caractérisé en ce qu'**il est appliqué avec l'addition ou le développement de mousse ou de micropores (agents moussants classiques, agents tensioactifs ou poudre d'aluminium).

7. Procédé selon l'une quelconque des revendications 1 à 6, **caractérisé en ce que** le mélange est formé avant la cokéfaction.

8. Procédé selon la revendication 7, **caractérisé en ce que** la surface est humectée avec de la poussière minérale.

9. Procédé selon la revendication 7 ou 8, **caractérisé en ce que** la surface est imperméabilisée contre l'absorption d'humidité.

10. Procédé selon l'une quelconque des revendications 1 à 9, **caractérisé en ce que** le gaz généré lors de la cokéfaction est utilisé comme gaz de chauffage pour le procédé.
